# EUROPEAN PATENT SPECIFICATION

(11) **EP 1 546 289 B1**
(45) Date of publication and mention of the grant of the patent: **12.07.2006**
(21) Application number: 03785080.7
(22) Date of filing: 06.08.2003
(51) Int. Cl.: C10G 45/48

(54) **PROCESS FOR HYDROGENATION OF AROMATICS IN HYDROCARBON FEEDSTOCKS CONTAINING THIOPHENEIC COMPOUNDS**
VERFAHREN ZUR HYDRIERUNG VON AROMATEN IN THIOPHENISCHE VERBINDUNGEN ENTHALTENDEN KOHLENWASSERSTOFF-EINSATZSTOFFEN
PROCEDE PERMETTANT L'HYDROGENATION DE COMPOSES AROMATIQUES DANS DES CHARGES CONTENANT DES COMPOSES THIOPHENIQUES

(30) Priority: 07.08.2002 US 213996
(43) Date of publication of application: 29.06.2005
(73) Proprietor: SHELL INTERNATIONALE RESEARCH MAATSCHAPPIJ B.V., 2501 CJ Den Haag (NL)
(72) Inventor: HIMELFARB, Paul, Benjeman, Houston, TX 77079 (US); WILSON, Charles, Eugene, Missouri City, TX 77459 (US)
(86) International application number: PCT/US2003/024924
(87) International publication number: WO 2004/015032

(56) References cited:
- EP-A- 0 731 156
- GB-A- 1 412 155
- US-A- 3 755 148
- US-A- 5 277 794

## Description

### Field of the Invention

The present invention is directed to a process for the hydrogenation of aromatics using nickel based catalysts. More particularly, the present invention relates to the hydrogenation of aromatics in hydrocarbon feedstocks containing thiopheneic compounds, which are known to deactivate nickel catalysts and to substantially reduce catalyst life.

### Background of the Invention

Nickel-containing catalysts are widely used to hydrogenate aromatic compounds in various hydrocarbon feedstocks. Because of the sensitivity of nickel catalysts to poisoning by sulfur compounds commonly found in such feedstocks, the feedstocks are normally desulfurized to a considerable degree prior to being contacted with the nickel catalyst. Despite the desulfurization step, it is not uncommon for small amounts of sulfur impurities to remain in the feedstocks, including aromatic sulfur compounds, such as thiophene, benzothiophene and dibenzothiophene, which are particularly poisonous to supported nickel catalysts.

Because the poisoning of nickel catalysts by sulfur compounds is a severe world-wide problem, extensive studies have been conducted in various laboratories in an attempt to determine the mechanism of sulfur poisoning, sometimes with-conflicting results. For example, in the work by Poels, E.K., van Beek, W. P., den Hoed, W., Visser, C. (1995); *Fuel* Vol. 74 No. 12, pp 1800-1805, sulfur poisoning on a variety of nickel catalysts having a wide range of nickel surface area was evaluated. The authors concluded for all the catalysts tested that surface poisoning by sulfur was the predominate deactivation mechanism. This study suggested that sulfur absorption could be switched from surface to bulk using higher temperature and lower sulfur content in the feeds. However, they concluded that moving into bulk sulfur absorption did not extend catalyst life, as a surface layer still controlled catalyst deactivation. Others have reported that bulk sulfur absorption can occur with thiol type sulfur, but not with thiophenes. While there may be disagreement as to the precise mechanism ofsulfur poisoning, it is generally accepted that the toxicity of sulfur compounds found in hydrocarbon feedstocks increases with the molecular weight and the complexity of the molecule, with thiopheneic compounds, such as thiophene, benzothiophene and dibenzothiophene beingespecially detrimental to nickel catalysts. A possible explanation for this is that higher molecular weight sulfur compounds, such as thiopheneic compounds, are not as readily decomposed as thiols, sulfides and mercaptans, but instead are adsorbed on the surface of the nickel catalyst forming a stable surface species which blocks active catalyst sties. This adsorption of thiopheneic compounds on the surface of the catalyst is generally believed to be irreversible due to the high heat of adsorption of these compounds. Since surface adsorption of sulfur compounds reduces active sites, catalyst vendors often quote catalyst lifetimes based on the sulfur in the feed and flows to get roughly one layer coverage of sulfur on the surface of the catalyst. Nickel based catalysts used to hydrogenate aromatics in feedstocks containing thiopheneic compounds generally have shorter catalyst lives than feedstocks containing lower molecular weight sulfur compounds, because of the tendency of the thiopheneic compounds under conventional process conditions to be adsorbed on the surface of the catalyst, thereby deactivating it. Accordingly, it can be seen that an aromatics hydrogenation process operated in such a manner that thiopheneic compounds in the feedstock did not poison or deactivate the nickel based catalyst employed in the process, would be highly desirable. The present invention provides such an improved process.

EP 0,731,156 discloses a process for treating a hydrocarbon feed containing undesired aromatic components, sulfur and nitrogen compounds using a hydroprocessing catalyst composition comprising zinc, a Group VIB metal and a Group VIII metal on a high surface area carbon support.

U.S. 5,277,794 discloses a process for converting, such as by aromatic saturation, a hydrocarbon-containing feedstock to upgraded hydrocarbon products using a catalyst comprising nickel, tungsten and phosphorus components supported on a porous, amorphous refractory oxide.

### Summary of the Invention

It has now been found, contrary to teachings in the prior art, that the lifetimes of nickel based catalysts exposed to thiopheneic compounds present in hydrocarbon feedstocks can be extended for considerable periods of time by control of certain process conditions as hereinafter described. Accordingly, the present invention is directed to an improved process for the hydrogenation of aromatics in hydrocarbon feedstocks containing thiopheneic compounds as impurities, the aromatics hydrogenation being conducted in a hydrogenation reactor in the presence of nickel based catalysts. The improvement comprises operating the hydrogenation reactor at a reaction temperature sufficiently high from the start of a run, that the thiopheneic compounds are decomposed and substantially absorbed into the bulk of the nickel based catalyst. It has been found that by operating the reactor at a higher reaction temperature from the start of the run, the thiopheneic compounds decompose and enter into the bulk nickel, instead of being adsorbed on the surface of the catalyst, thereby decreasing the poisoning impact of the thiopheneic compounds and substantially extending the life of the catalyst.

### Brief Description of the Drawings

Figure 1 is a graph showing the effect of reaction temperature on sulfur poisoning of a nickel catalyst by a thiopheneic compound in a hydrocarbon solvent feedstock. The results are expressed in terms of as aromatics concentration in the product as a function of sulfur exposure and reaction temperature.
Figure 2 is a graph showing aromatics concentration in the product from the hydrogenation of a hydrocarbon solvent feedstock containing different thiopheneic compounds at different concentrations.
Figure 3 is a graph showing the attempted recovery of a deactivated nickel catalyst by raising the temperature to elevated levels.

### Detailed Description of the Invention

The present invention relates to an improved process for hydrogenating aromatics in hydrocarbon feedstocks containing thiopheneic compounds using nickel based catalysts. The term "thiopheneic compounds" as used herein is intended to include relatively high molecular weight aromatic sulfur compounds such as thiophene, benzothiophene, dibenzothiophene and the like, which are known poisons to nickel based catalysts.

The improved aromatics hydrogenation process of the present invention involves contacting a hydrocarbon feedstock containing aromatics and thiopheneic compounds with an activated nickel based catalyst in a reactor, at a relatively high reaction temperature from the start of the run. Typically, a new charge of nickel catalyst is "activated" following a procedure recommended by the catalyst vendor. The activation procedure usually involves heating the catalyst in the reactor at specified heating rates and for specified periods of time in flowing hydrogen which reduces the nickel catalyst thereby activating it. Specifically, this step reduces nickel oxide to nickel metal. The latter is the active site in the catalyst. After the catalyst is "activated" the reactor is cooled down and the run is started by introducing hydrocarbon feedstock into the reactor with hydrogen. Because, nickel catalysts are generally believed to deactivate more rapidly at higher temperatures, commercial aromatics hydrogenation reactors are normally started at the lowest temperature required to meet product specifications. As the catalyst deactivates over time, the reactor temperature is raised to compensate for the loss in activity.

The basis for the present invention is the surprising discovery that by operating the aromatics hydrogenation process at an elevated temperature from the start of the run, it is possible to convert thiopheneic compounds into species that are diffused or absorbed into the bulk of the nickel catalyst instead of forming surface species which poison the catalyst. Because of this, nickel catalysts employed in the improved process of the invention have longer lifetimes, in some cases up to three times or more the lifetimes of catalysts run on the same feed at a lower starting temperature.

A further surprising discovery is that if the process is operated at a lower temperature initially and the catalyst deactivates, the activity cannot be restored by raising the temperature to elevated levels thereafter. It appears that once the thiopheneic compounds are adsorbed on the surface of the catalyst and cover a substantial number of active sites, it is difficult to substantially restore lost activity. Thus, the key to the improved process of the present invention is to operate the process at an elevated temperature from the start of the run, and to maintain the process at a temperature sufficiently high that the thiopheneic compounds present in the feedstock continue to be converted into a species which is absorbed into the catalyst bulk, instead of being adsorbed on the catalyst surface.

The term "start of the run" as used herein generally refers to the point in time that feedstock containing thiopheneic compounds and hydrogen are first introduced into a reactor containing a new or fresh charge of active nickel based catalyst. "Start of the run" generally does not include any catalyst activation procedure per se, which is normally accomplished in the absence of feedstock. While it is preferred to bring the reactor to the required high temperature from the time feedstock and hydrogen are first introduced into the reactor, the term "start of the run" in its broader sense is intended to include any point in time before the nickel catalyst adsorbs a substantial amount of thiopheneic compounds on its surface. Thus, short delays in bringing the reactor to the required temperature after feedstock introduction is still considered to come within meaning of "start of the run", and to be within the scope of the present invention.

The term "reaction temperature" refers to the temperature at which the hydrocarbon feedstock and hydrogen make initial contact with active nickel catalyst in the reactor. In a typical fixed-bed downflow reactor with a fresh charge of catalyst, the "reaction temperature will be essentially the same as the reactor inlet temperature. Since the hydrogenation of aromatics is an exothermic reaction, there will usually be temperature differential across the catalyst bed, with the reactor outlet temperature normally being higher than the reactor inlet temperature. As a run progresses, that portion of catalyst in the reactor with the greatest exposure to sulfur compounds will deactivate first, and hydrogenation of aromatics will occur in subsequent portions of the catalyst bed until there is insufficient active catalyst remaining in order to meet product specifications, at which time the catalyst will be need to be replaced.

In practice of the improved process of the present invention it is critical that the reaction temperature be maintained from the start of the run sufficiently high that the thiopheneic compounds present in the hydrocarbon feedstock will be converted into a species which is absorbed in the bulk of the nickel, instead of being adsorbed on the surface of the catalyst. It is also important that the temperature throughout the reactor not exceed the temperature at which unwanted side reactions, such as cracking will occur.

While the reaction temperature in accordance with the present invention may vary somewhat depending on the activity of the nickel based catalyst being used and the particular reactor design, the reaction temperature from the start of the run will generally range from 140°C to 225°C, preferably from 149°C to 200°C, and most preferably from 150°C to 175°C. Based on the foregoing teachings and the examples, it will be apparent to those skilled in the art what reaction temperatures to employ to obtain bulk sulfiding of thiopheneic compounds in various other types of reactors which may be used for aromatics hydrogenation.

Other suitable process conditions for carrying out the improved aromatics hydrogenation process of the invention include a total pressure of 1480 kPa to 5617 kPa (200 psig to 800 psig), preferably from 2170 kPa to 4238 kPa (300 psig to 600 psig), and a liquid hourly space velocity (LHSV) of from 0.5 to 5.0, preferably from 1.0 to 3.0.

Hydrogen use in terms of hydrogen consumption basis the total hydrogen flow is in the range of from 5% to 80%, preferably in the range of from 20% to 50%.

Hydrocarbon feedstocks suitable for use in the improved aromatics hydrogenation process of the present invention include any hydrocarbon or mixture of hydrocarbons boiling in the range of 80°C to 350°C and containing from 1 w% to 80 w% aromatics, up to 100 w% aromatics, preferably from 2 w% to 50 w% aromatics. It is noted that in commercial practice with higher aromatic concentrations in the feed, it is typical to dilute the feed with product recycle to control heat release, thereby diluting the actual aromatic level reaching the catalyst in the reactor.

The improved aromatics hydrogenation process of the invention can be employed to reduce the aromatics concentration in the hydrocarbon feedstocks being treated to the desired level. For example, depending on product specifications, to levels of less than about 0.2 w%, less than about 0.02 w%, or even less than about 0.002 w%, (the latter value being the limit of detection).

Suitable feedstocks include light and heavy solvents, white oils, naphtha, kerosene, diesel and the like containing from 0.1 ppm to 50 ppm thiopheneic compounds, preferably from 0.2 ppm to 10 ppm thiopheneic compounds. The improved process of the invention is particularly advantageous in the dearomatization of hydrocarbon solvent feedstocks, such as light and heavy solvents, including naphtha, boiling in the range of from 80°C to 350°C. Applications for the solvent products after hydrogenation include use in coatings (paint, varnishes and lacquers), industrial cleaners, printing inks, extractive processes, and pharmaceuticals.

Any modem nickel based catalyst may be employed in the improved aromatics hydrogenation process of the invention. This includes catalysts prepared by impregnation referred as supported nickel catalysts and also those prepared by coprecipitation referred to as bulk nickel catalysts. Supported nickel catalysts which may be used in the process of the invention will generally have a nickel content of from 10 w% to 35 w%, preferably from 15 w% to 30 w%. Bulk nickel catalysts which may be used in the process of the invention will generally have a nickel content from 20 w% to 80 w%, with a nickel content of 30 w% to 70 w% being preferred. The nickel contents are all based on final, activated (reduced) catalyst. Thus, the overall range of nickel contents for the nickel based catalysts suitable for use in the improved process of the invention is from 10 w% to 80 w%. The nickel catalysts suitable for use in the present process may include minor amounts of other catalytic metals as long as such metals do not interfere with the decomposition of the thiopheneic compounds and formation of the bulk sulfur species.

Suitable supports for supported nickel based catalysts include one or more refractory oxides such as alumina, silica, silica alumina, titania, zirconia and combinations thereof. Alumina, silica, or mixtures thereof, are particularly preferred supports. The BET surface area of the final catalyst may range from 40 m²/g to 300 m²/g, preferably from 80 m²/g to 250 m²/g.

### Example 1:

A set of experiments was conducted to demonstrate the effect of reaction temperature on the poisoning of supported nickel catalysts used for hydrogenation of hydrocarbon feedstocks containing thiopheneic compounds. The catalyst used in these experiments was a commercially available high activity nickel catalyst containing 28 w% nickel on an alumina support having a BET surface area of 120-140 m²/g. The catalyst was supplied in a pre-reduced and air.stabilized form. A 25 cc portion of the catalyst (with a 1:6 dilution with silicon carbide to ensure catalyst particle wetting) was placed in a conventional fixed-bed down-flow reactor. The catalyst was activated in flowing hydrogen at approximately 8 liters/hour by heating the catalyst to 120°C at 40°C/hr and holding for two hours, followed by heating to 230°C at 40°C/hr and holding for an additional two hours to reduce surface nickel oxide. The catalyst was then cooled to room temperature.

Five runs were conducted using a hydrocarbon solvent feedstock with a boiling point range of from 103°C to 302°C, with an aromatics content of 17 w%, and containing approximately 50 ppm of benzothiophene. Each of the five runs was conducted at process conditions including: a LHSV of 1, a pressure of 3756 kPa (530 psig), volume hydrogen/volume feed of approximately 500. The only variable between the different runs was the reaction temperature. For Run 1 the reaction temperature from the start of the run was 52°C. For Run 2 the reaction temperature from the start of the run was 93°C. For Run 3 the reaction temperature from the start of the run was 121 °C. For each of Runs 4 and 5 the reaction temperature from the start of the runs was 149°C.

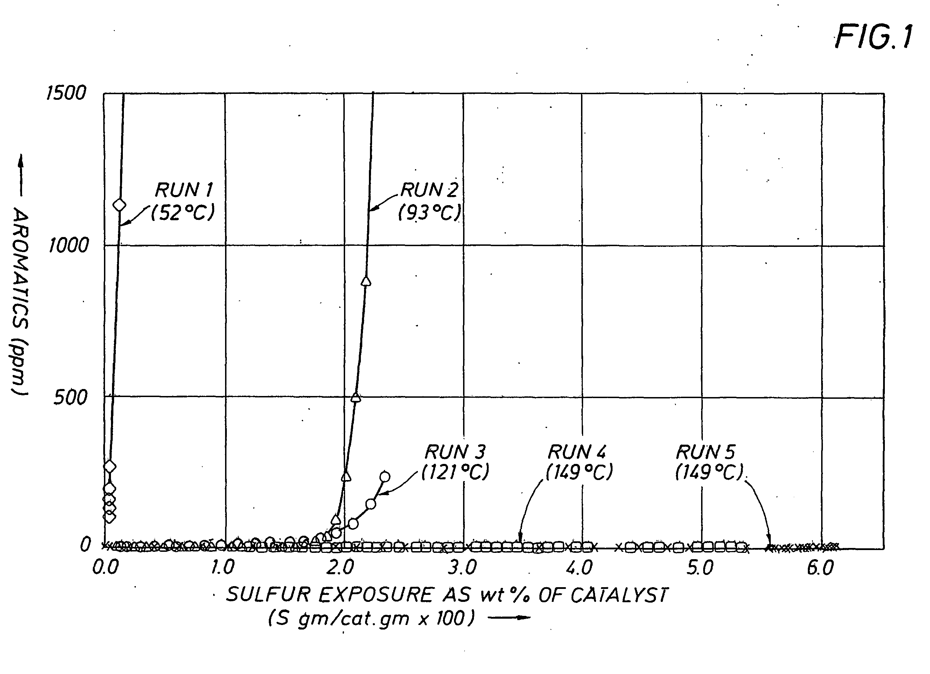

The results of these five runs, showing aromatics concentration as a function of sulfur exposure (i.e., benzothiophene exposure) and reaction temperature, is presented in Figure 1. Note that the sulfur exposure, given as a percent of sulfur per weight of catalyst, is calculated bases the sulfur (benzothiophene) level in the feed passed over the catalyst. At the lowest temperature (52°C), the catalyst almost immediately deactivates with negligible sulfur (0.1 w%) on the catalyst. At moderate temperatures (92°C and 121°C), the catalyst appears deactivated at about 2 w% sulfur on the catalyst. At the higher reaction temperature of 149°C, which is in accordance with the present invention, there is no indication of catalyst deactivation with over 6 w% sulfur on the catalyst. The catalyst used in Run 5 was analyzed for sulfur content and was found to have 6.5 w%, which is in good agreement with the calculated value. The sulfur level in the product was measured periodically in Runs 4 and 5 and was always less than 1 ppm, while the feed had about 50 ppm. Thus, all the benzothiophene in the feed passed over the catalyst was converted to a species which was absorbed on/into the catalyst bulk without deactivating it.

The foregoing experiments indicate that at low temperatures (52°C) deactivation occurs very rapidly, partially due to low activity of the catalyst at this temperature, with sulfur loading increasing the deactivation rate. At moderate temperatures (93°C and 121°C), the catalyst showed a rapid deactivation at about 2% sulfur loading, which level corresponds to approximately one monolayer coverage over the available nickel surface. At the higher reaction temperature (149°C), in accordance with the invention, the sulfur level of 6.5 w% on the catalyst when the run was stopped corresponds to over three monolayers coverage, which together with the continued high activity, indicates bulk sulfiding is occurring instead of deactivating surface sulfiding.

### Example 2:

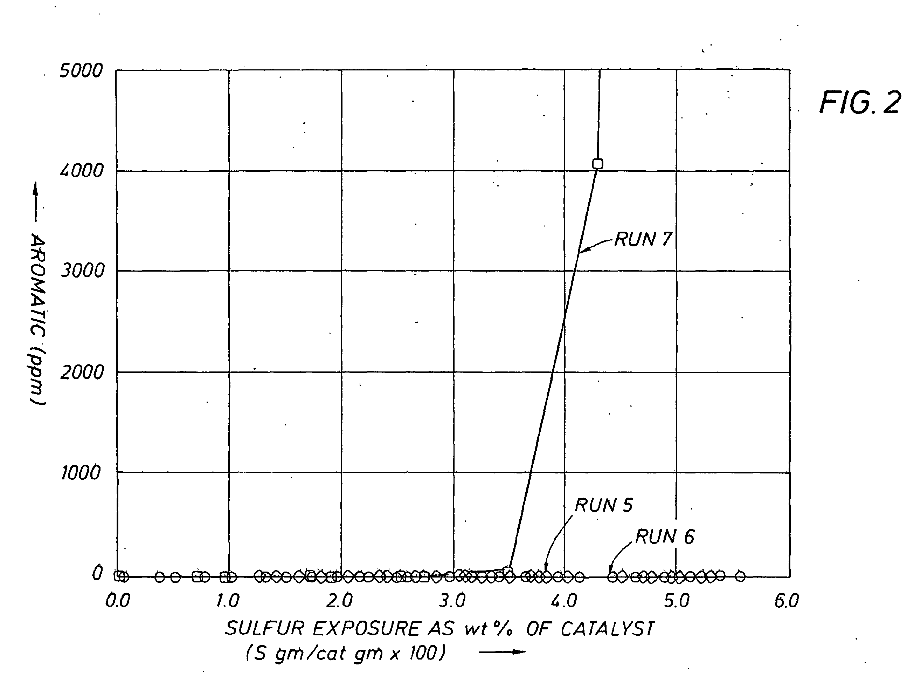

To demonstrate that the bulk nickel sulfiding observed with benzothiophene at high temperatures was applicable to other thiopheneic compounds, a further study was conducted using thiophene, as well as benzothiophene at two different concentration levels. This study involved two additional runs (Runs 6 and 7) using the same catalyst, hydrocarbon solvent feedstock and process conditions as in Example 1, except all the runs were conducted at a temperature of 149°C. The only variables between the three runs was the concentration and type of thiopheneic compounds which were as follows: Run 6 approximately 50 ppm thiophene, Run 5 approximately 50 ppm benzothiophene (same as in Example 1, above), and Run 7 approximately 400 ppm benzothiophene. The results of these three runs are shown in Figure 2.

The results of Runs 5 and 6 show that thiophene behaves similar to benzothiophene and that bulk sulfiding can be obtained for either, provided the proper reaction temperature is employed from the start of the run. In Run 7 the catalyst was deactivated with approximately 3.5 % sulfur loading, as compared to no apparent deactivation with sulfur loadings up to 6.5 % for Runs 5 and 6. This indicates that at very high concentrations of thiopheneic compounds in the feedstock (400 ppm), the surface sulfur poisoning has a greater effect on the catalyst and can reduce the beneficial effects of bulk sulfiding.

### Example 3

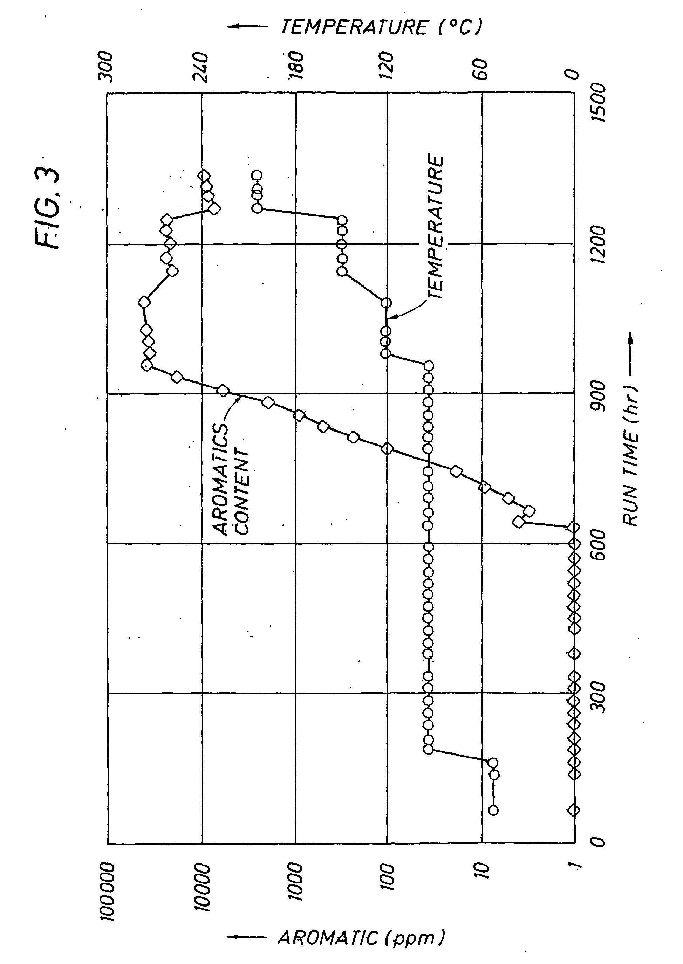

An experiment was conducted to determine if the activity of a catalyst poisoned by sulfur adsorbed on the surface of the catalyst at low or moderate reaction temperatures, could be recovered by raising the reaction temperature to a higher temperature were bulk sulfiding takes place. In this experiment, after the catalyst in Run 2 at 93°C was surface sulfur poisoned, the reaction temperature was raised in several steps to 200°C. From the results of this experiment shown in Figure 3, it can be seen that by raising the temperature further deactivation can be stopped, but the activity already lost can be only marginally recovered, in spite of the fact that the upper temperature used (200°C) was over 50°C higher than required for bulk sulfur deposition had the proper reaction temperature been used from the start of the run.

The above examples demonstrate that sulfur poisoning by thiopheneic compounds of supported nickel catalysts used for aromatics hydrogenation can be avoided in accordance with the improved process of the present invention, by employing a reaction temperature from the start of the run which is conducive to the absorption of the sulfur into the bulk of the nickel, rather than being adsorbed on the surface of the catalyst. Because more than three times as much sulfur from thiopheneic compounds can be absorbed into the bulk of the catalyst without deactivating it, the improved process of the present invention results in a dramatic enhancement of catalyst life, e.g., up to a threefold or more increase.

## Claims

1. A process for the hydrogenation of aromatics contained in a hydrocarbon feedstock, said process comprises:
providing a hydrogenation reactor containing a fresh charge of activated nickel based catalyst;
introducing said hydrocarbon feedstock comprising hydrocarbons boiling in the range of from 80°C to 350°C, from 1 wt% to 80 wt% aromatics and from 0.1 ppm to 50 ppm thiopheneic compounds into said hydrogenation reactor;
operating said hydrogenation reactor at a reaction temperature from start of run in the range of from 140°C to 225°C; and
yielding from said hydrogenation reactor a hydrocarbon product having an aromatics concentration of less than 0.2 wt%.

2. The process of claim 1 wherein the thiopheneic compounds comprise thiophene, benzothiophene, dibenzothiophene and mixtures thereof.

3. The process of claim 1 wherein said nickel based catalyst contains from 10 w% to 80 w% nickel.

4. The process of claim 3 wherein said nickel based catalyst is a supported nickel catalyst and contains from 10 w% to 35 w% nickel.

5. The process of claim 3 wherein said nickel based catalyst is a bulk nickel catalyst and contains from 20 w% to 80 w% nickel.

6. The process of claim 4 wherein the support for said supported nickel catalyst is alumina, silica or mixtures thereof.

7. The process of claim 6 wherein the aromatics in the hydrocarbon feedstock comprise from 2 w% to 50 w% aromatics.

8. The process of claim 1 wherein the aromatics content of the product after hydrogenation is less than about 0.02 w%.

9. The process of claim 1 wherein said nickel based catalyst has a surface area of from 40 m²/g to 300 m²/g.

10. The process of claim 7 wherein the hydrocarbon feedstock contains from 0.2 ppm to 10 ppm thiopheneic compounds.

11. The process of claim 4 wherein said supported nickel catalyst contains from 15 w% to 30 w% nickel.

12. The process of claim 11 wherein said supported nickel catalyst has a surface area of from 80 m²/g to 250 m²/g.

13. The process of claim 1 wherein the reaction temperature from the start of the run is in the range of from 149°C to 200°C.

14. The process of claim 13 wherein the total pressure is from 1480 kPa to 5617 kPa (200 psig to 800 psig).

15. The process of claim 14 wherein the LHSV is from 0.5 hr⁻¹ to 5.0 hr⁻¹.

16. The process of claim 15 wherein the hydrogen consumption basis the total hydrogen flow is from 5% to 80%.

17. The process of claim 16 wherein the total pressure is from 2170 kPa to 4238 kPa (300 psig to 600 psig).

18. The process of claim 17 wherein the LHSV is from 1.0 hr⁻¹ to 3.0 hr⁻¹.

19. The process of claim 18 wherein the hydrogen consumption basis the total hydrogen flow is from 20% to 50%.

20. The process of claim 3 wherein said supported nickel catalyst has a surface area of from 80 m²/g to 250 m²/g.

21. The process of claim 12 wherein the reaction temperature from the start of the run is in the range of from 150°C to 175°C.

22. The process of claim 1 wherein the lifetime of said nickel based catalyst is extended threefold or more as compared to the same catalyst started at a reaction temperature below which said thiopheneic compounds are absorbed into the bulk of said nickel based catalyst.

23. The process of claim 21 wherein the lifetime of said supported nickel catalyst is extended threefold or more as compared to the same catalyst started at a reaction temperature below which said thiopheneic compounds are absorbed into the bulk of said supported nickel catalyst.

## Patentansprüche

1. Verfahren zur Hydrierung von in einem Kohlenwasserstoffeinsatzmaterial enthaltenen Aromaten, welches Verfahren umfaßt:
Bereitstellen eines Hydrierreaktors, der eine frische Ladung an aktiviertem Katalysator auf Nickelbasis enthält;
Einführen des Kohlenwasserstoffeinsatzmaterials, das im Bereich von 80°C bis 350°C siedende Kohlenwasserstoffe, 1 bis 80 Gew.-% Aromaten und 0,1 bis 50 ppm Thiophenverbindungen umfaßt, in den Hydrierreaktor;
Betreiben des Hydrierreaktors bei einer Reaktionstemperatur vom Beginn des Durchsatzes im Bereich von 140 bis 225°C; und
Gewinnen eines Kohlenwasserstoffproduktes mit einer Aromatenkonzentration von kleiner als 0,2 Gew.-% aus dem Hydrierreaktor.

2. Verfahren nach Anspruch 1, worin die Thiophenverbindungen Thiophen, Benzothiophen, Dibenzothiophen und Gemische davon umfassen.

3. Verfahren nach Anspruch 1, worin der Katalysator auf Nickelbasis von 10 bis 80 Gew.-% Nickel enthält.

4. Verfahren nach Anspruch 3, worin der Katalysator auf Nickelbasis ein Nickel-Trägerkatalysator ist und von 10 bis 35 Gew.-% Nickel enthält.

5. Verfahren nach Anspruch 3, worin der Katalysator auf Nickelbasis ein Nickel-Massekatalysator ist und von 20 bis 80 Gew.-% Nickel enthält.

6. Verfahren nach Anspruch 4, worin der Träger für den Nickel-Trägerkatalysator Aluminiumoxid, Siliciumoxid oder ein Gemisch davon ist.

7. Verfahren nach Anspruch 6, worin die Aromaten in dem Kohlenwasserstoffeinsatzmaterial 2 bis 50 Gew.-% Aromaten ausmachen.

8. Verfahren nach Anspruch 1, worin der Aromatengehalt des Produktes nach der Hydrierung kleiner als etwa 0,02 Gew.-% ist.

9. Verfahren nach Anspruch 1, worin der Katalysator auf Nickelbasis eine Oberfläche von 40 bis 300 m²/g aufweist.

10. Verfahren nach Anspruch 7, worin das Kohlenwasserstoffeinsatzmaterial von 0,2 bis 10 ppm Thiophenverbindungen enthält.

11. Verfahren nach Anspruch 4, worin der Nickel-Trägerkatalysator von 15 bis 30 Gew.-% Nickel enthält.

12. Verfahren nach Anspruch 11, worin der Nickel-Trägerkatalysator eine Oberfläche von 80 bis 250 m²/g aufweist.

13. Verfahren nach Anspruch 1, worin die Reaktionstemperatur vom Beginn des Durchsatzes im Bereich von 149°C bis 200°C liegt.

14. Verfahren nach Anspruch 13, worin der Gesamtdruck von 1.480 kPa bis 5.617 kPa (200 psig bis 800 psig) beträgt.

15. Verfahren nach Anspruch 14, worin die auf Flüssigkeit bezogene stündliche Raumgeschwindigkeit LHSV von 0,5 hr⁻¹ bis 5,0 hr⁻¹ beträgt.

16. Verfahren nach Anspruch 15, worin der Wasserstoffverbrauch, bezogen auf den Gesamtwasserstoffstrom, von 5 bis 80% beträgt.

17. Verfahren nach Anspruch 16, worin der Gesamtdruck von 2.170 kPa bis 4.238 kPa (300 psig bis 600 psig) beträgt.

18. Verfahren nach Anspruch 17, worin die LHSV von 1,0 hr⁻¹ bis 3,0 hr⁻¹ beträgt.

19. Verfahren nach Anspruch 18, worin der Wasserstoffverbrauch, bezogen auf den Gesamtwasserstoffstrom, von 20 bis 50% beträgt.

20. Verfahren nach Anspruch 3, worin der Nickel-Trägerkatalysator eine Oberfläche von 80 m²/g bis 250 m²/g aufweist.

21. Verfahren nach Anspruch 12, worin die Reaktionstemperatur vom Beginn des Durchsatzes im Bereich von 150°C bis 175°C liegt.

22. Verfahren nach Anspruch 1, worin die Lebensdauer des Katalysators auf Nickelbasis auf das Dreifache oder darüber hinaus verlängert wird, verglichen mit dem gleichen Katalysator, der bei einer Reaktionstemperatur unter jener gestartet wird, bei welcher die Thiophenverbindungen in die Masse des Katalysators auf Nickelbasis absorbiert werden.

23. Verfahren nach Anspruch 21, worin die Lebensdauer des Nickel-Trägerkatalysators auf das Dreifache oder darüber hinaus verlängert wird, verglichen mit dem gleichen Katalysator, der bei einer Reaktionstemperatur gestartet wird, unter der die Thiophenverbindungen in die Masse des Nickel-Trägerkatalysators absorbiert werden.

## Revendications

1. Procédé pour l'hydrogénation de composés aromatiques contenus dans une charge d'alimentation hydrocarbonée, ledit procédé comprend :
la présence d'un réacteur d'hydrogénation contenant une charge fraîche de catalyseur à base de nickel activé;
l'introduction de ladite charge d'alimentation hydrocarbonée comprenant des hydrocarbures bouillant dans l'intervalle de 80°C à 350°C, de 1 % en poids à 80 % en poids de composés aromatiques et de 0,1 ppm à 50 ppm de composés thiophéniques dans le réacteur d'hydrogénation précité;
l'utilisation dudit réacteur d'hydrogénation à une température de réaction dès le commencement de l'opération dans l'intervalle de 140°C à 225°C; et
l'obtention à partir du réacteur d'hydrogénation précité d'un produit hydrocarboné ayant une concentration en composés aromatiques de moins de 0,2 % en poids.

2. Procédé suivant la revendication 1, dans lequel les composés thiophéniques comprennent du thiophène, du benzothiophène, du dibenzothiophène et leurs mélanges.

3. Procédé suivant la revendication 1, dans lequel le catalyseur à base de nickel précité contient de 10 % en poids à 80 % en poids de nickel.

4. Procédé suivant la revendication 3, dans lequel ledit catalyseur à base de nickel est un catalyseur au nickel fixé sur support et contient de 10 % en poids à 35 % en poids de nickel.

5. Procédé suivant la revendication 3, dans lequel le catalyseur à base de nickel précité est un catalyseur au nickel massique et contient de 20 % en poids à 80 % en poids de nickel.

6. Procédé suivant la revendication 4, dans lequel le support pour ledit catalyseur au nickel fixé sur support est de l'alumine, de la silice ou leurs mélanges.

7. Procédé suivant la revendication 6, dans lequel les composés aromatiques dans la charge d'alimentation hydrocarbonée constituent de 2 % en poids à 50 % en poids de composés aromatiques.

8. Composé suivant la revendication 1, dans lequel la teneur en composés aromatiques du produit après hydrogénation est inférieure à environ 0,02 % en poids.

9. Procédé suivant la revendication 1, dans lequel le catalyseur à base de nickel précité a une aire superficielle de 40 m²/g à 300 m²/g.

10. Procédé suivant la revendication 7, dans lequel la charge d'alimentation hydrocarbonée contient de 0,2 ppm à 10 ppm de composés thiophéniques.

11. Procédé suivant la revendication 4, dans lequel ledit catalyseur au nickel fixé sur support contient de 15 % en poids à 30 % en poids de nickel.

12. Procédé suivant la revendication 11, dans lequel ledit catalyseur au nickel fixé sur support a une aire superficielle de 80 m²/g à 250 m²/g.

13. Procédé suivant la revendication 1, dans lequel la température de réaction dès le commencement de l'opération se situe dans l'intervalle de 149°C à 200°C.

14. Procédé suivant la revendication 13, dans lequel la pression totale est de 1 480 kPa à 5 617 kPa (200 psig à 800 psig).

15. Procédé suivant la revendication 14, dans lequel la VSHL est de 0,5 h⁻¹ à 5,0 h⁻¹.

16. Procédé suivant la revendication 15, dans lequel la consommation d'hydrogène sur la base de la circulation d'hydrogène totale est de 5 % à 80 %.

17. Procédé suivant la revendication 16, dans lequel la pression totale est de 2 170 kPa à 4 238kPa (300 psig à 600 psig).

18. Procédé suivant la revendication 17, dans lequel la VSHL est de 1,0 h⁻¹ à 3,0 h⁻¹.

19. Procédé suivant la revendication 18, dans lequel la consommation d'hydrogène sur la base de la circulation d'hydrogène totale est de 20 % à 50 %.

20. Procédé suivant la revendication 3, dans lequel le catalyseur au nickel fixé sur support précité a une aire superficielle de 80 m²/g à 250 m²/g.

21. Procédé suivant la revendication 12, dans lequel la température de réaction dès le commencement de l'opération se situe dans l'intervalle de 150°C à 175°C.

22. Procédé suivant la revendication 1, dans lequel la durée de vie du catalyseur à base de nickel précité est prolongée de trois fois ou plus comparativement au même catalyseur lancé à une température de réaction en dessous de laquelle les composés thiophéniques précités sont absorbés dans la masse dudit catalyseur à base de nickel.

23. Procédé suivant la revendication 21, dans lequel la durée de vie du catalyseur au nickel fixé sur support précité est prolongée de trois fois ou plus comparativement au même catalyseur lancé à une température de réaction en dessous de laquelle les composés thiophéniques précités sont absorbés dans la masse dudit catalyseur au nickel fixé sur support.
